# EUROPÄISCHE PATENTANMELDUNG

(11) **EP 4 273 024 A1**
(43) Veröffentlichungstag der Anmeldung: **08.11.2023**
(21) Anmeldenummer: 22171153.4
(22) Anmeldetag: 02.05.2022
(51) Int. Cl.: B62D 5/00

(54) **LENKSÄULE FÜR EIN KRAFTFAHRZEUG**

(71) Anmelder: thyssenkrupp Presta Aktiengesellschaft, 9492 Eschen (LI); thyssenkrupp AG, 45143 Essen (DE)
(72) Erfinder: Ficca, Riccardo, 6811 Göfis (AT); Polmans, Kristof, 6464 Tarrenz (AT); Szepessy, Imre, 9493 Mauren (LI); Delmarco, Claudio, 9463 Oberriet (CH); Dold, Markus, 9475 Sevelen (CH)
(74) Vertreter: thyssenkrupp Intellectual Property GmbH

(57) **Zusammenfassung**

Die vorliegende Erfindung betrifft eine Lenksäule (1) für ein Kraftfahrzeug, die eine relativ zu einer Trageinheit (3) um eine Längsachse (L) drehbar gelagerte Lenkwelle (2) aufweist, die mit einem Drehdämpfer (7) zusammenwirkt, der ein an der Trageinheit (3) festgelegtes Dämpfergehäuse (71) aufweist, in dem ein mit der Lenkwelle (2) verbundener Rotor (73) drehbar angeordnet ist und in dem ein fließfähiges, magnetisierbare Partikel (75) aufweisendes Magnetmedium eingeschlossen ist, wobei der Drehdämpfer (7) einen Magnetfeldgenerator (76) aufweist, der ansteuerbar ist zur Erzeugung eines Magnetfelds in dem Dämpfergehäuse (71). Um einen verbesserten magnetischen Dämpfer bereitzustellen, schlägt die Erfindung vor, dass das Magnetmedium ein trockenes Pulver (74) ist.

## Beschreibung

### Stand der Technik

Die Erfindung betrifft eine Lenksäule für ein Kraftfahrzeug, die eine relativ zu einer Trageinheit um eine Längsachse drehbar gelagerte Lenkwelle aufweist, die mit einem Drehdämpfer zusammenwirkt, der ein an der Trageinheit festgelegtes Dämpfergehäuse aufweist, in dem ein mit der Lenkwelle verbundener Rotor drehbar angeordnet ist und in dem ein fließfähiges, magnetische bzw. magnetisierbare Partikel aufweisendes Magnetmedium eingeschlossen ist, wobei der Drehdämpfer einen Magnetfeldgenerator aufweist, der ansteuerbar ist zur Erzeugung eines Magnetfelds in dem Dämpfergehäuse.

Steer-by-Wire-Lenksysteme für Kraftfahrzeuge können manuelle Lenkbefehle des Fahrers wie konventionelle mechanische Lenkungen durch Drehung einer an einer Trageinheit gelagerten Lenkhandhabe, beispielsweise eines Lenkrades entgegennehmen, welches am fahrerseitigen, hinteren Ende angebracht ist. Die Lenkhandhabe ist jedoch nicht wie bei einem konventionellen Lenksystem mechanisch über eine Lenkwelle und ein Lenkgetriebe mit den zu lenkenden Rädern verbunden, sondern wirkt mit Drehsensoren zusammen, die einen manuell als Drehung der Lenkwelle eingebrachten Lenkbefehl erfassen und daraus ein elektrisches Steuersignal erzeugen, und an einen elektromotorischen Lenksteller abgeben, der mittels eines elektrischen Stellantriebs einen dem Lenkbefehl entsprechenden Lenkeinschlag der Räder einstellt.

Durch die fehlende mechanische Kopplung erhält der Fahrer bei Steer-by-Wire-Systemen von den gelenkten Rädern keine unmittelbare mechanische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände auf die Lenkhandhabe zurück übertragen wird. Die fehlende haptische Rückmeldung erschwert dem Fahrer, aktuelle Fahrsituationen sicher zu erfassen und angemessene Lenkmanöver durchzuführen, wodurch die Fahrzeuglenkbarkeit und damit die Fahrsicherheit beeinträchtigt werden.

Zur Erzeugung eines realistischeren Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein elektrisches Steuersignal zu bilden, welches einen Drehdämpfer ansteuert, der auf die Lenkwelle ein von der Fahrsituation abhängiges Bremsmoment ausübt. Dieses Bremsmoment wirkt einer Drehung der Lenkwelle bei einer manuellen Lenkeingabe entgegen, so dass ein realistisch erscheinender Lenkwiderstand wie bei einer konventionellen, mechanisch mit den zu lenkenden Rädern gekuppelten Lenkung simuliert wird.

Im Stand der Technik ist beispielsweise aus der EP 1 332 946 B1 oder der US 2001/0032749 A1 bekannt, als Drehdämpfer einen magneto-rheologischen Dämpfer einzusetzen, der im Folgenden kurz als Magnetdämpfer bezeichnet wird. Dieser umfasst ein an der Trageinheit fixiertes, mit einem magneto-rheologischen Fluid gefülltes Dämpfergehäuse, in dem ein mit der Lenkwelle gekuppelter Rotor angeordnet ist. Mittels einer an eine Steuereinheit angeschlossenen elektrischen Magnetgenerators kann fahrsituationsabhängig ein das Dämpfergehäuse durchsetzendes Magnetfeld erzeugt werden, welches eine Erhöhung der Viskosität des magneto-rheologischen Fluids bewirkt, wodurch die Drehung des Rotors relativ zum Dämpfergehäuse gebremst wird.

Das im Stand der Technik als Magnetmedium eingesetzte magneto-rheologische Fluid weist in einer Trägerflüssigkeit, beispielsweise einem Öl oder dergleichen, suspendierte Magnetpartikel auf. Diese hat zwar den Vorteil, dass für das Bremsmoment keine mechanischen Teile bewegt werden müssen. Der Einsatz von flüssigen Betriebsmedien im Kraftfahrzeug wird jedoch grundsätzlich als problematisch angesehen, und insbesondere die flüssigkeitsdichte Kopplung des Rotors mit der Lenkwelle gegen die üblicherweise niedrigviskose Trägerflüssigkeit ist aufwendig und verschleißanfällig. Die sichere Abdichtung ist insbesondere auch deswegen erforderlich, weil selbst ein geringer Verlust von Trägerflüssigkeit negative Auswirkungen auf die Betriebssicherheit des magneto-rheologischen Fluids haben kann.

Die bekannten magneto-rheologischen Fluide weisen weiterhin relativ stark temperaturabhängige Eigenschaften auf. Zudem ist die Dämpfungswirkung von der Winkelgeschwindigkeit des Rotors abhängig. Durch diese Effekte kann die Dämpfungswirkung beeinträchtigt werden.

Angesichts der vorangehend erläuterten Problematik ist es eine Aufgabe der vorliegenden Erfindung, einen verbesserten magnetischen Dämpfer bereitzustellen.

### Darstellung der Erfindung

Diese Aufgabe wird erfindungsgemäß gelöst durch das Lenksystem mit den Merkmalen des Anspruchs 1. Vorteilhafte Weiterbildungen ergeben sich aus den Unteransprüchen.

Bei einer Lenksäule für ein Kraftfahrzeug, die eine relativ zu einer Trageinheit um eine Längsachse drehbar gelagerte Lenkwelle aufweist, die mit einem Drehdämpfer zusammenwirkt, der ein an der Trageinheit festgelegtes Dämpfergehäuse aufweist, in dem ein mit der Lenkwelle verbundener Rotor drehbar angeordnet ist und in dem ein fließfähiges, magnetsierbare Partikel aufweisendes Magnetmedium eingeschlossen ist, wobei der Drehdämpfer einen Magnetfeldgenerator aufweist, der ansteuerbar ist zur Erzeugung eines Magnetfelds in dem Dämpfergehäuse, ist erfindungsgemäß vorgesehen, dass das Magnetmedium ein trockenes Pulver ist.

Gemäß der Erfindung wird das Magnetmedium durch ein trockenes Pulver gebildet, welches gleichbedeutend als Magnetpulver bezeichnet wird, welches gebildet durch magnetische oder magnetisierbare Partikel oder Körner, die Magnetpartikel darstellen. Das Magnetmedium weist keine flüssige Komponente auf. Mit anderen Worten weist es keine Trägerflüssigkeit auf. Darin besteht ein wesentlicher Unterschied zum Stand der Technik, bei dem das Magnetmedium in einer Trägerflüssigkeit suspendierte Magnetpartikel aufweist. Erfindungsgemäß sind die aus Feststoff gebildeten Partikel, als schütt- bzw. fließfähiges, inhomogenes Feststoff-Gas-Gemenge in dem Innenraum des Dämpfergehäuses zwischen dem Rotor und der Innenwandung des Dämpfergehäuses angeordnet, wobei das Gas die atmosphärische Luft sein kann.

Ein wesentlicher Vorteil ist, dass im Magnetmedium keine flüssige Phase vorhanden ist, so dass die allgemein als problematisch angesehene Verwendung von Flüssigkeit im Kraftfahrzeug vermieden werden kann. Ein weiterer Vorteil ist, dass die Abdichtung der drehbar aus dem Dämpfergehäuse herausgeführte Rotorwelle, beispielsweise die Lenkwelle, lediglich partikel- oder pulverdicht ausgestaltet sein muss, um das Magnetmedium sicher im Innenraum des Dämpfergehäuses zurückzuhalten. Dadurch kann die Dichtanordnung einfacher gestaltet sein als die im Stand der Technik zwingend erforderliche flüssigkeitsdichte Dichtung. Dadurch wird ein einfacherer Aufbau ermöglicht. Zudem kann dadurch eine höhere Betriebssicherheit erreicht werden, dass eine Degradation durch einen eventuellen Austritt von Trägerflüssigkeit praktisch vermieden werden kann.

Durch den erfindungsgemäßen Wegfall der Trägerflüssigkeit wird zudem die im Stand der Technik nachteilige Temperaturabhängigkeit der Dämpfungswirkung beseitigt.

Ein weiterer Vorteil ist, dass die Dämpfungswirkung im Wesentlichen unabhängig oder zumindest weniger stark abhängig von der Winkelgeschwindigkeit des Rotors ist.

Das Dämpfergehäuse weist als Innenraum eine geschlossene Kammer auf, in welcher der Rotor drehbar angeordnet ist, wobei das Pulver zwischen dem Rotor und der Innenwandung eingeschlossen ist. Der Füllgrad ist so gewählt, dass ohne ein zur Aktivierung der Dämpfung angelegtes, den Innenraum durchsetzendes Magnetfeld die Partikel relativ zueinander bewegbar sind.

Zur Erzeugung eines Brems- oder Dämpfungsmoments wird durch den Magnetfeldgenerator, der bevorzugt eine elektrisch bestrombare Magnetspulenanordnung aufweist, ein den Innenraum des Dämpfergehäuses durchsetzendes Magnetfeld erzeugt. Dieses bewirkt, dass abhängig von der Stärke des erzeugten magnetischen Flusses die Partikel magnetisch zusammenhaften, was eine Erhöhung der Reibungskraft zwischen Rotor und Dämpfergehäuse bewirkt, um ein manuell in die Lenkwelle eingegebenes Lenkmoment abzubremsen. Auf diese Weise kann die Dämpfungswirkung durch Steuerung des Magnetfelds betriebssituationsabhängig eingestellt werden, wie dies bei magneto-rheologischen Dämpfern im Prinzip bekannt ist. Dabei können durch die Erfindung die eingangs beschriebenen Vorteile dieses Wirkprinzips realisiert werden, ohne die im Stand der Technik bestehenden Nachteile.

Die Trageinheit ist ausgebildet, um an der Fahrzeugkarosserie festgelegt zu werden, und weist entsprechend geeignete Befestigungsmittel auf, beispielsweise Befestigungsbohrungen oder dergleichen. Das Dämpfergehäuse kann direkt oder mittelbar an der Trageinheit fixiert sein, beispielsweise an einer von der Trageinheit gehaltenen Manteleinheit, in der die Lenkwelle drehbar gelagert ist. Es kann allgemein auch ein von der Trageinheit gehaltenes Lenksäulengehäuse vorgesehen sein.

Es ist vorteilhaft, dass die Partikel ferromagnetisch ausgebildet sind. Dies kann dadurch realisiert werden, dass sie ein eisenhaltiges Material aufweisen, beispielsweise Ferrit oder dergleichen.

Es kann vorgesehen sein, dass die Partikel ein Metall aufweisen. Dies kann beispielsweise ein ferromagnetisches Metall wie Eisen, Kobalt oder Nickel sein, oder eine ferromagnetische Legierung.

Es kann vorgesehen sein, dass die Partikel einen Kunststoff aufweisen. Als Kunststoff kann ein Polymermaterial eingesetzt werde, beispielsweise ein thermoplastisches Polymer. Ein Vorteil dabei ist, dass die Reibung zwischen Kunststoffoberflächen ohne zusätzliche Schmiermittel gering ausgestaltet sein kann, und entsprechend die Reibung zwischen den Partikeln verringert werden kann. Es ist möglich, dass ein magnetisches Material, beispielsweise metallische Partikel, in der Polymermatrix verteilt eingebettet sind, so dass eine Art magnetischer Kunststoff gebildet wird. Alternativ kann ein Kunststoff eine Art Umhüllung oder Beschichtung der Partikel bilden.

Eine vorteilhafte Ausführung kann vorsehen, dass die Partikel einen Kern aus einem Kernmaterial aufweisen, der eine Beschichtung aus einem zum Kernmaterial unterschiedlichen Beschichtungsmaterial aufweist. Beispielsweise kann ein Kern aus metallischem Material mit einer Kunststoffbeschichtung beschichtet sein. Ein Vorteil ist, dass die magnetischen Eigenschaften des Kerns unabhängig von dem Beschichtungsmaterial vorgegeben werden können, welches beispielsweise bezüglich guter Gleiteigenschaften optimiert sein kann.

Es ist mit Vorteil möglich, dass die Partikel reibungsmindernd ausgestaltet sind. Dadurch, dass die Partikel eine reibungsarme Oberfläche aufweisen, beispielsweise durch eine physische und/oder chemische Oberflächenstrukturierung, und/oder eine reibungsmindernde Beschichtung oder dergleichen, kann die Fließfähigkeit des Pulvers optimiert werden. Dies kommt einem großen Dämpfungsbereich zugute. Beispielsweise kann eine Beschichtung einen gut gleitfähigen Kunststoff wie Polytetrafluorethylen (PTFE) oder dergleichen vorgesehen sein, oder eine Hartstoff- oder Graphitbeschichtung, eine Oberflächenmodifikation oder dergleichen.

Bevorzugt kann vorgesehen sein, dass das Pulver Partikel mit einer definierten Partikelgrößenverteilung aufweist. Dadurch, dass die Partikel als Körner mit einer definierten Partikelgröße und Korngrößenverteilung gemäß einer definierten Sieblinie ausgebildet sind, kann in vorteilhafter Weise das Fließverhalten und die Packungsdichte des Pulvers vorgegeben werden. Auf diese Weise kann eine Optimierung des Dämpfungsverhaltens realisiert werden.

Es ist vorteilhaft, dass der Rotor an einer Rotorwelle angebracht ist, die durch mindestens eine pulverdicht ausgestaltete Drehdurchführung durch das Dämpfergehäuse drehbar durchgeführt ist. Die Drehdurchführung bildet ein Lager in der Wandung des Dämpfergehäuses, durch das die Rotorwelle drehbar aus dem Innenraum des Dämpfergehäuses nach außen geführt ist, wo sie direkt oder mittelbar mit der Lenkwelle gekuppelt ist.

Die vorgenannte Ausführung kann dadurch realisiert sein, dass die Drehdurchführung einen Lagerspalt aufweist, der kleiner ist die kleinsten Partikel des Pulvers. Der Lagerspalt zwischen Rotorwelle und Wandung des Dämpfergehäuses, die den Innenraum umschließt, muss bei der Erfindung nur partikeldicht, aber nicht wie im Stand der Technik flüssigkeitsdicht sein. Dies ermöglicht eine vereinfachte Bauweise.

Es ist möglich, dass der Rotor auf der Lenkwelle fixiert ist. Dabei kann die Rotorwelle durch einen Abschnitt der Lenkwelle gebildet sein, auf dem in dem Dämpfergehäuse der Rotor fixiert ist. Das Dämpfergehäuse kann die Lenkwelle koaxial zur Längsachse der Lenkwelle umschließen.

Eine denkbare Ausführungsform ist, dass der Drehdämpfer an einer Manteleinheit fixiert ist, die von der Trageinheit gehalten ist. Die Manteleinheit kann beispielsweise einen von der Trageinheit gehaltenen Führungskasten, ein Mantelrohr oder dergleichen aufweisen. Darin ist die Lenkwelle drehbar gelagert.

Der den Rotor und der diesen umschließende Innenraum des Dämpfergehäuses können rotationssymmetrisch ausgebildet sein, beispielsweise zylindrisch, bevorzugt koaxial zur Rotations- bzw. Längsachse. Es ist ebenfalls möglich, dass der Rotor asymmetrisch angeordnet oder ausgebildet ist, beispielsweise einen oder mehrere radial abstehende Flügel oder dergleichen aufweisend.

Bevorzugt kann die Manteleinheit relativ zur Trageinheit verstellbar sein. An dem bezüglich der Fahrtrichtung hinteren, der Fahrerposition zugewandten Endbereich, kann an der Lenkwelle eine Lenkhandhabe zur manuellen Lenkeingabe fixiert sein, beispielsweise ein Lenkrad. Dadurch, dass die Manteleinheit in Längsrichtung der Längsachse und/oder quer dazu in Höhenrichtung relativ zur Trageinheit verstellbar und lösbar fixierbar ist, kann eine Längs-und/oder Höhenverstellung der Lenkradposition zur Anpassung an die Fahrerposition erfolgen.

Für eine Anwendung als Steer-by-Wire-Lenksäule ist es vorteilhaft, dass ein motorischer Feedbackaktuator mit der Lenkwelle gekuppelt ist. Der Feedback-Aktuator weist eine elektromotorische Antriebsvorrichtung und eine Drehmomenterzeugungseinrichtung auf, die fahrsituationsabhängig ein aktives Reaktions- oder Feedback-Moment in die Lenkwelle und damit in die Lenkhandhabe einkoppeln kann. Dadurch kann zusätzlich zu einem Bremsmoment des erfindungsgemäßen Drehdämpfers ein der Lenkeingabe entgegenwirkendes aktives Rückstellmoment erzeugt werden, wodurch ein realistischeres Lenkgefühl erzeugt werden kann.

Es ist vorteilhaft, dass die Lenksäule als Steer-by-Wire-Lenksäule ausgebildet ist. Diese weist keine mechanische Verbindung mit den zu lenkenden Rädern auf. Eine manuelle Lenkeingabe wird mittels elektrischer Drehsensoren erfasst, die Drehwinkel- und/oder Drehmomentsensoren umfassen können, die über eine elektrische Steuereinheit elektrische Lenkaktuatoren zur Erzeugung eines Lenkeinschlags der zu lenkenden Räder ansteuern.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung einer erfindungsgemäßen Lenksäule,
- Figur 2: eine schematische Schnittdarstellung eines erfindungsgemäßen Drehdämpfers der Lenksäule gemäß Figur 1.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

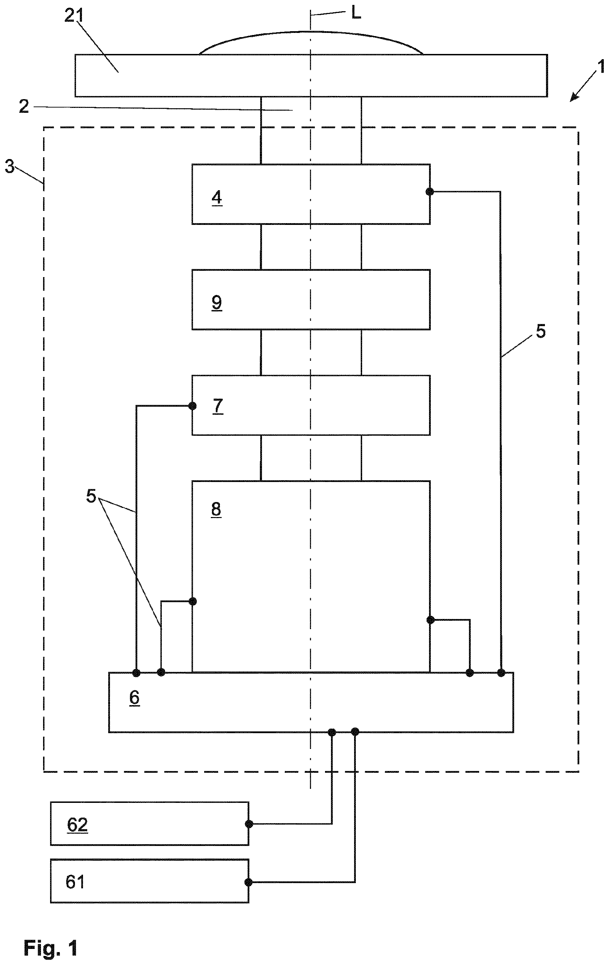

Fig. 1 zeigt in einer schematischen Darstellung eine als Steer-by-Wire-Lenksäule ausgebildete erfindungsgemäße Lenksäule 1. Diese weist eine Lenkwelle 2 auf, welche relativ zu einer Trageinheit 3, beispielsweise einer an einer nicht dargestellten Fahrzeugkarosserie eines Kraftfahrzeugs anbringbaren Manteleinheit oder einem Führungskasten, um ihre Längsachse L drehbar gelagert ist. Am bezüglich der Fahrtrichtung hinteren Ende, in Figur 1 oben, ist an der Lenkwelle 2 als manuelle Lenkhandhabe ein Lenkrad 21 oder dergleichen angebracht.

Die Lenksäule 2 weist einen elektrischen Drehsensor 4 auf, der ausgebildet ist, den über das Lenkrad 21 ausgeübten Drehwinkel und/oder das Drehmoment zu erfassen und als elektrisches Steuersignal über eine elektrische Steuerleitung 5 an eine Steuereinheit 6 (ECU = electronic control unit) zu leiten.

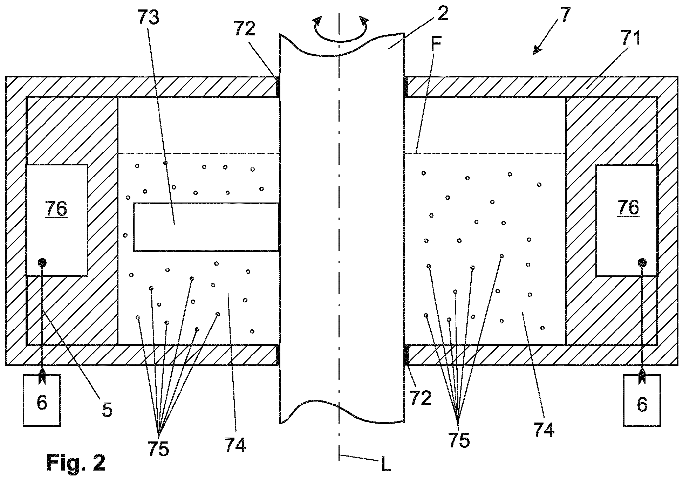

Ein erfindungsgemäßer Drehdämpfer 7 ist ebenfalls mit der Lenkwelle 2 wirkverbunden. Dieser ist über eine elektrische Steuerleitung 5 an die Steuereinheit 6 angeschlossen. Der detaillierte Aufbau ist weiter unten anhand von Figur 2 näher erläutert.

Ein elektromotorischer Feedback-Aktuator 8 ist ebenfalls an die Lenkwelle 2 angekoppelt, und über eine Steuerleitung 5 an die Steuereinheit 6 angeschlossen. Der Feedback-Aktuator 8 weist einen hier nicht dargestellten elektrischen Motor auf, der von der Steuereinheit 6 angesteuert werden kann, um betriebssituationsabhängig ein aktives Feedback-Moment in die Lenkwelle 2 einzukoppeln.

Zur Energieversorgung ist die Steuereinheit 6 an eine elektrische Fahrzeug-Energieversorgung 61 angeschlossen.

Zum Datenaustausch relevanter Betriebs- und Fahrzeugdaten ist die Steuereinheit 6 an ein Fahrzeug-Datennetzwerk 62 angeschlossen.

Optional kann ein Umdrehungsbegrenzer 9 vorgesehen sein, der den maximal möglichen Drehwinkel der Lenkwelle 2 begrenzt.

In Figur 2 ist schematisch ein Längsschnitt durch den erfindungsgemäßen Drehdämpfer 7 dargestellt. Dieser umfasst ein Dämpfergehäuse 71, das an der Trageinheit 3 fixiert ist.

Die relativ zum Dämpfergehäuse 71 drehbare Lenkwelle 2 ist in Drehdurchführungen 72 drehbar gelagert und durch die Wandungen und den Innenraum des Dämpfergehäuses 71 durchgeführt.

Im Innenraum des Dämpfergehäuses 71 ist ein Rotor 73 radial abstehend auf der Lenkwelle 2 drehfest fixiert.

In dem geschlossenen Innenraum des Dämpfergehäuses 71 ist als Magnetmedium erfindungsgemäß ein trockenes Pulver 74 eingeschlossen, das aus einer Vielzahl von magnetischen bzw. magnetisierbaren Partikeln 75 gebildet ist. In der Darstellung sind die Partikel 75 schematisch übertrieben stark vergrößert dargestellt, und aus Gründen der Übersichtlichkeit ist exemplarisch nur ein kleiner Teil der tatsächlichen Gesamtzahl dargestellt. Tatsächlich kann der Innenraum beispielsweise bis zu der gestrichelt angedeuteten Füllstandslinie F mit Pulver 74 befüllt sein.

Magnetspulen 76 eines Magnetgenerators sind über die Steuerleitungen 5 an die Steuereinheit 6 angeschlossen, und können von dieser bestromt werden, um ein den Innenraum des Dämpfergehäuses 71 durchsetzendes Magnetfeld zu erzeugen.

Durch eine Ansteuerung, d.h. Bestromung der Magnetspulen 76 durch die Steuereinheit 6 kann ein Magnetfeld erzeugt werden, durch das die Partikel 75 magnetisch stärker aneinander anhaften, je stärker das Magnetfeld ist. Dadurch kann die Reibkraft zwischen dem Rotor 73 und dem Dämpfergehäuse 71 eingestellt werden, um eine fahrsituationsabhängige Bremswirkung auf die Lenkwelle 2 und das daran angebrachte Lenkrad 21 zu erzeugen.

Die Partikel 75 können ausgebildet sein, wie oben in der Beschreibung angegeben.

Der radiale Lagerspalt zwischen dem Außenumfang der Lenkwelle 2 und den Drehdurchführungen 72 kann bevorzugt kleiner sein als die kleinste Partikelgröße der Partikel 75.

### Bezugszeichenliste

- 1: Lenksäule
- 2: Lenkwelle
- 21: Lenkrad
- 3: Trageinheit (Manteleinheit)
- 4: Drehsensor
- 5: Steuerleitung
- 6: Steuereinheit (ECU)
- 61: Fahrzeug-Energieversorgung
- 62: Fahrzeug-Datennetzwerk
- 7: Drehdämpfer
- 71: Dämpfergehäuse
- 72: Drehdurchführung
- 73: Rotor
- 74: Pulver
- 75: Partikel
- 76: Magnetspulen (Magnetgenerator)

- L: Längsachse
- F: Füllstandslinie

## Patentansprüche

1. Lenksäule (1) für ein Kraftfahrzeug, die eine relativ zu einer Trageinheit (3) um eine Längsachse (L) drehbar gelagerte Lenkwelle (2) aufweist, die mit einem Drehdämpfer (7) zusammenwirkt, der ein an der Trageinheit (3) festgelegtes Dämpfergehäuse (71) aufweist, in dem ein mit der Lenkwelle (2) verbundener Rotor (73) drehbar angeordnet ist und in dem ein fließfähiges, magnetisierbare Partikel (75) aufweisendes Magnetmedium eingeschlossen ist, wobei der Drehdämpfer (7) einen Magnetfeldgenerator (76) aufweist, der ansteuerbar ist zur Erzeugung eines Magnetfelds in dem Dämpfergehäuse (71),
**dadurch gekennzeichnet,**
**dass** das Magnetmedium ein trockenes Pulver (74) ist.

2. Lenksäule nach Anspruch 1, **dadurch gekennzeichnet, dass** die Partikel (75) ferromagnetisch ausgebildet sind.

3. Lenksäule nach einem der vorangehenden Ansprüche, **dadurch gekennzeichnet, dass** die Partikel (75) ein Metall aufweisen.

4. Lenksäule nach einem der vorangehenden Ansprüche, **dadurch gekennzeichnet, dass** die Partikel (75) einen Kunststoff aufweisen.

5. Lenksäule nach einem der vorangehenden Ansprüche, **dadurch gekennzeichnet, dass** die Partikel (75) einen Kern aus einem Kernmaterial aufweisen, der eine Beschichtung aus einem zum Kernmaterial unterschiedlichen Beschichtungsmaterial aufweist.

6. Lenksäule nach einem der vorangehenden Ansprüche, **dadurch gekennzeichnet, dass** die Partikel (75) reibungsmindernd ausgestaltet sind.

7. Lenksäule nach einem der vorangehenden Ansprüche, **dadurch gekennzeichnet, dass** das Pulver (74) Partikel (75) mit einer definierten Partikelgrößenverteilung aufweist.

8. Lenksäule nach einem der vorangehenden Ansprüche, **dadurch gekennzeichnet, dass** der Rotor (73) an einer Rotorwelle (2) angebracht ist, die durch mindestens eine pulverdicht ausgestaltete Drehdurchführung (72) durch das Dämpfergehäuse (71) drehbar durchgeführt ist.

9. Lenksäule nach Anspruch 8, **dadurch gekennzeichnet, dass** die Drehdurchführung (2) einen Lagerspalt aufweist, der kleiner ist als die kleinsten Partikel (75) des Pulvers (74).

10. Lenksäule nach einem der vorangehenden Ansprüche, **dadurch gekennzeichnet, dass** der Rotor (73) auf der Lenkwelle (2) fixiert ist.

11. Lenksäule nach einem der vorangehenden Ansprüche, **dadurch gekennzeichnet, dass** der Drehdämpfer (7) an einer Manteleinheit fixiert ist, die von der Trageinheit (3) gehalten ist.

12. Lenksäule nach einem der vorangehenden Ansprüche, **dadurch gekennzeichnet, dass** die Manteleinheit relativ zur Trageinheit (3) verstellbar ist.

13. Lenksäule nach einem der vorangehenden Ansprüche, **dadurch gekennzeichnet, dass** ein motorischer Feedbackaktuator (8) mit der Lenkwelle (2) gekuppelt ist.

14. Lenksäule nach einem der vorangehenden Ansprüche, **dadurch gekennzeichnet, dass** sie als Steer-by-Wire-Lenksäule ausgebildet ist.
